# EUROPÄISCHE PATENTANMELDUNG

(11) **EP 3 527 408 A1**
(43) Veröffentlichungstag der Anmeldung: **21.08.2019**
(21) Anmeldenummer: 18210438.0
(22) Anmeldetag: 05.12.2018
(51) Int. Cl.: B60G 17/0165

(54) **VERFAHREN ZUR STEIGERUNG EINES KOMFORTS EINES FAHRZEUGNUTZERS EINES FAHRZEUGS**

(30) Priorität: 15.02.2018 DE 102018202313
(71) Anmelder: ZF Friedrichshafen AG, 88046 Friedrichshafen (DE)
(72) Erfinder: Knoll, Andreas, 88214 Ravensburg (DE); Heimann, Jens, 88719 Stetten (DE)

(57) **Zusammenfassung**

Bei einem Verfahren (V) zur Steigerung eines Komforts eines Fahrzeugnutzers eines Fahrzeugs (F) ermittelt zuerst ein Sensorsystem des Fahrzeugs (1) eine Bewegung eines Fahrwerks (2) und/oder eines Chassis (3) des Fahrzeugs (1). Ausgehend von den Sensordaten wird eine Fahrbahnanregung bestimmt. Eine Steuereinrichtung (7), die mit dem Sensorsystem verbunden ist, steuert ausgehend von der Fahrbahnanregung eine Fahrerkabinen-Lagerung (4) des Fahrzeugs (1) an, wobei die Fahrerkabinen-Lagerung (4) mit der Steuereinrichtung (7) verbunden ist. Die Fahrerkabinen-Lagerung (4) wird in einer Totzeit (To) zwischen der Fahrbahnanregung und einer Reaktion einer Fahrerkabine (5) des Fahrzeugs (1) derart aktuiert, dass die Reaktion der Fahrerkabine (5) auf die Fahrbahnanregung abgeschwächt wird.

## Beschreibung

Die vorliegende Erfindung betrifft ein Verfahren zur Steigerung eines Komforts eines Fahrzeugnutzers eines Fahrzeugs mit den Merkmalen nach Anspruch 1, eine Steuereinrichtung für ein Fahrzeug mit den Merkmalen nach Anspruch 7, ein Fahrzeug mit den Merkmalen nach Anspruch 8, ein Computerprogrammprodukt mit den Merkmalen nach Anspruch 9 und ein computerlesbares Medium mit den Merkmalen nach Anspruch 10.

Bei LKWs ist es üblich, dass neben dem Fahrwerk auch die Fahrerkabine (auch als Fahrerhaus bezeichnet) über Feder-Dämpfer-Einheiten gelagert ist. Um den Komfort des Fahrzeugnutzers, der sich in der Fahrerkabine befindet, zu erhöhen, ist dies vorteilhaft, da sich der Fahrzeugnutzer bei einer Fahrt mit dem LKW über einen sehr langen Zeitraum in der Fahrerkabine befindet.

Aus DE 10 2005 005 723 A1 ist ein Zugfahrzeug bekannt, das eine beweglich gelagerte Fahrerkabine aufweist. Eine Dämpfungseinrichtung ist zwischen der Fahrerkabine und einem Grundrahmen angeordnet. Eine Erfassungseinrichtung ermittelt Bewegungen der Fahrerkabine z.B. in Hochrichtung. Die Bewegung kann beispielsweise aus einem Hub oder einem Wanken der Fahrerkabine ermittelt werden. Außerdem kann eine Beschleunigung ermittelt werden. Eine Stelleinrichtung wird in Abhängigkeit von der ermittelten Bewegung der Fahrerkabine angesteuert, so dass eine Dämpfung in Hinblick auf den Fahrkomfort verbessert wird.

Der vorliegenden Erfindung liegt ausgehend vom Stand der Technik die Aufgabe zu Grunde, eine alternative Möglichkeit zur Steigerung des Komforts eines Fahrzeugnutzers eines Fahrzeugs vorzuschlagen.

Die vorliegende Erfindung schlägt ausgehend von der vorgenannten Aufgabe ein Verfahren zur Steigerung eines Komforts eines Fahrzeugnutzers eines Fahrzeugs nach Anspruch 1, eine Steuereinrichtung für ein Fahrzeug nach Anspruch 7, ein Fahrzeug nach Anspruch 8, ein Computerprogrammprodukt nach Anspruch 9 und ein computerlesbares Medium nach Anspruch 10 vor.

Bei einem Verfahren zur Steigerung eines Komforts eines Fahrzeugnutzers eines Fahrzeugs ermittelt zuerst ein Sensorsystem des Fahrzeugs eine Bewegung eines Fahrwerks oder Chassis des Fahrzeugs. Ausgehend von den Sensordaten wird eine Fahrbahnanregung bestimmt. Eine Steuereinrichtung, die mit dem Sensorsystem verbunden ist, steuert ausgehend von der Fahrbahnanregung eine Fahrerkabinen-Lagerung des Fahrzeugs an, wobei die Fahrerkabinen-Lagerung mit der Steuereinrichtung verbunden ist. Die Fahrerkabinen-Lagerung wird in einer Totzeit zwischen der Fahrbahnanregung und einer Reaktion einer Fahrerkabine des Fahrzeugs derart aktuiert, dass die Reaktion der Fahrerkabine auf die Fahrbahnanregung abgeschwächt wird. Das Fahrzeug kann beispielsweise ein NKW, eine Landmaschine oder PKW sein. Vorzugsweise ist das Fahrzeug ein NKW.

Das Fahrzeug weist das Sensorsystem auf. Dieses Sensorsystem kann beispielsweise Beschleunigungssensoren, Geschwindigkeitssensoren, Höhenstandssensoren, Drucksensoren, optische Sensoren und/oder Wegsensoren umfassen. Das Sensorsystem kann dabei an dem Fahrwerk des Fahrzeugs angeordnet sein und/oder an dem Chassis des Fahrzeugs. Selbstverständlich können einzelne Sensoren des Sensorsystems an dem Chassis und andere Sensoren des Sensorsystems an dem Fahrwerk des Fahrzeugs angeordnet sein. Beispielsweise können an einem Radträger des Fahrzeugs einzelne Sensoren des Sensorsystems oder das gesamte Sensorsystem angeordnet sein. Zusätzlich oder alternativ dazu können an der Chassis-Seite der Fahrerkabinen-Lagerung einzelne Sensoren des Sensorsystems oder das Sensorsystem angeordnet sein. Zusätzlich oder alternativ dazu können an einem Frontalbereich des Chassis einzelne Sensoren des Sensorsystems oder das Sensorsystem angeordnet sein. Der Frontalbereich ist dabei der Bereich des Chassis, der an einer Fahrzeugfront angeordnet ist. Vorzugsweise können Beschleunigungssensoren an den Radträgern des Fahrzeugs angeordnet sein.

Das Sensorsystem ist mit der Steuereinrichtung des Fahrzeugs verbunden. Diese Verbindung ist derart, dass ein Datenaustausch zwischen der Steuereinrichtung und dem Sensorsystem stattfinden kann. Das Sensorsystem kann derart ausgeformt sein, dass dieses eine Auswertung der von ihm ermittelten Daten selbst ausführt. Zu diesem Zweck kann das Sensorsystem eine eigene Steuervorrichtung aufweisen. Alternativ dazu kann die Auswertung der ermittelten Daten von der zentralen Steuereinrichtung des Fahrzeugs ausgeführt werden. Die Verbindung zwischen der Steuereinrichtung des Fahrzeugs und dem Sensorsystem kann kabelgebunden oder drahtlos ausgeformt sein. Die Steuereinrichtung kann beispielsweise ein ECU oder Domain-ECU sein.

Das Fahrzeug weist weiterhin die Fahrerkabine auf. Diese ist mittels der Fahrerkabinen-Lagerung an dem Chassis des Fahrzeugs gelagert. Das Chassis des Fahrzeugs ist verbunden mit dem Fahrwerk des Fahrzeugs. Die Fahrerkabinen-Lagerung ist als aktive Fahrerkabinen-Lagerung ausgeformt. Das heißt, dass die Fahrerkabinen-Lagerung eine Aktuatorik aufweist, mittels welcher eine Dämpfung der Fahrerkabinen-Lagerung aktuiert werden kann. Das heißt, es kann die Stärke dieser Dämpfung bedarfsgerecht eingestellt werden. Beispielsweise kann die Fahrerkabinen-Lagerung mittels aktiven Feder-Dämpfer-Modulen ausgeformt sein. Die Fahrerkabinen-Lagerung ist mit der Steuereinrichtung verbunden. Genauer gesagt ist die Steuereinrichtung mit der Aktuatorik der Die Fahrerkabinen-Lagerung verbunden. Diese Verbindung ist derart ausgeformt, dass ein Datenaustausch erfolgen kann. Die Verbindung kann entweder kabelgebunden oder drahtlos ausgeformt sein.

Das Fahrzeug weist an seinem Fahrwerk wenigstens einen Dämpfer oder wenigstens ein Feder-Dämpfer-Modul pro Rad auf. Beispielsweise kann das Fahrwerk wenigstens einen CDC-Dämpfer /Continuous Damping Control) pro Rad aufweisen. Diese sind ebenfalls aktiv, d.h. aktuierbar ausgeformt.

Um den Komfort des Fahrzeugnutzers, der sich während einer Fahrt mit dem Fahrzeug in der Fahrerkabine aufhält, zu steigern, wird zuerst mittels des Sensorsystems eine Bewegung des Fahrwerks und/oder des Chassis des Fahrzeugs ermittelt. Beispielsweise wird die Bewegung an den ungefederten Massen des Fahrwerks ermittelt, z. B. an einem Radträger oder an einem Lenker des Fahrwerks. Es kann entweder die Bewegung des Fahrwerks ermittelt werden oder die Bewegung des Chassis. Alternativ dazu kann sowohl die Bewegung des Fahrwerks als auch die Bewegung des Chassis ermittelt werden. Das Sensorsystem oder einzelne Sensoren des Sensorsystems sind dabei an wenigstens einem Bauelement des Fahrwerks und/oder an wenigstens einem Bauelement des Chassis angeordnet. Je nachdem, welche Art der Bewegung ermittelt wird, ist die Ausformung des Sensorsystems eine andere.

In einer ersten Variante ist die Bewegung, die durch das Sensorsystem ermittelt wird, durch eine vertikale Beschleunigung oder eine vertikale Geschwindigkeit des Fahrwerks und/ oder des Chassis ausgebildet. Das heißt, dass das Sensorsystem wenigstens einen Beschleunigungssensor oder wenigstens einen Geschwindigkeitssensor aufweist, der an dem Fahrwerk oder an dem Chassis angeordnet ist. Das Sensorsystem ermittelt kontinuierlich mittels seines wenigstens einen Beschleunigungssensors eine vertikale Beschleunigung des Fahrwerks und/oder des Chassis, je nachdem, wo dieser angeordnet ist. Alternativ dazu ermittelt das Sensorsystem mittels seines wenigstens einen Geschwindigkeitssensors eine vertikale Geschwindigkeit des Fahrwerks und/oder des Chassis, je nachdem, wo dieser angeordnet ist. Wiederum alternativ dazu kann das Sensorsystem sowohl die Geschwindigkeit als auch die Beschleunigung des Fahrwerks und/oder des Chassis ermitteln.

In einer weiteren Variante ist die Bewegung, die durch das Sensorsystem ermittelt wird, durch eine Abstandänderung des Fahrwerks und/ oder des Chassis zur Fahrbahn ausgebildet. Das heißt, dass das Sensorsystem derart ausgebildet ist, dass es einen Abstand zur Fahrbahn des Bauelements des Fahrwerks und/oder des Chassis, an dem es angeordnet ist, kontinuierlich ermitteln kann und somit die Änderung des Abstands feststellen kann. Dazu kann das Sensorsystem beispielsweise wenigstens einen Ultraschallsensor, wenigstens einen Infrarotsensor, wenigstens ein Lidarsystem, wenigstens ein Radarsystem, oder wenigstens einen anderen geeigneten Sensor zur Abstandsmessung aufweisen. Selbstverständlich kann an mehreren Bauelementen des Fahrwerks wenigstens ein Sensor zur Abstandsmessung angeordnet sein. Zum Beispiel kann an jedem Radträger des Fahrwerks ein Sensor zur Abstandsmessung angeordnet sein.

In einer weiteren Variante ist die Bewegung, die durch das Sensorsystem ermittelt wird, als eine Relativbewegung zwischen Chassis und Fahrwerk ausgebildet. Beispielsweise kann das Sensorsystem zu diesem Zweck wenigstens einen Höhenstandssensor aufweisen. Die Relativbewegung zwischen Chassis und Fahrwerk ist dabei diejenige Bewegung, die beispielsweise durch ein Nicken des Fahrzeugs hervorgerufen wird. Die Relativbewegung wird kontinuierlich ermittelt. Die Höhenstandssensoren sind handelsübliche Höhenstandssensoren, die in Fahrzeugen bereits zum Einsatz kommen, wenn z. B. ein automatisches Nachstellen eines Scheinwerfers erfolgen soll.

In einer weiteren Variante ist die Bewegung, die durch das Sensorsystem ermittelt wird, durch einen Kolbenweg wenigstens eines Dämpfers des Fahrwerks ausgebildet. Dazu weist wenigstens einer der Dämpfer wenigstens einen Wegesensor auf, der den Kolbenweg des Dämpfers kontinuierlich ermittelt. Dabei kann entweder der absolute Kolbenweg oder nur die Änderung des Kolbenwegs ermittelt werden. Somit weist das Sensorsystem wenigstens einen Wegesensor auf. Selbstverständlich kann der Kolbenweg jedes Dämpfers des Fahrwerks ermittelt werden, wobei dann jeder Dämpfer wenigstens einen Wegesensor aufweist.

In einer weiteren Variante ist die Bewegung, die durch das Sensorsystem ermittelt wird, durch einen Druck wenigstens eines Dämpfers des Fahrwerks ausgebildet. Dazu weist wenigstens einer der Dämpfer des Fahrwerks wenigstens einen Drucksensor auf, der den Druck kontinuierlich entweder relativ oder absolut ermittelt. Es wird also entweder die Änderung des Drucks festgestellt oder der vorherrschende absolute Druck. Somit weist das Sensorsystem wenigstens einen Drucksensor auf. Selbstverständlich kann der Druck jedes Dämpfers des Fahrwerks ermittelt werden, wobei dann jeder Dämpfer wenigstens einen Drucksensor aufweist.

Die Bewegung kann entweder nach nur einer der eben genannten Varianten ermittelt werden oder nach einer Kombination aus mehreren der eben genannten Varianten. Bei einer Kombination der Varianten ist es vorteilhaft, dass eine Plausibilisierung der Sensordaten erfolgen kann, um Fehler des Verfahrens zu vermeiden. Bei einer Fahrt des Fahrzeugs wird die Bewegung kontinuierlich ermittelt, d. h. über den gesamten Fahrtverlauf hinweg.

Ausgehend von diesen Sensordaten wird eine Fahrbahnanregung bestimmt. Diese Fahrbahnanregung ist diejenige Schwingungs-Anregung, die aufgrund der Fahrt des Fahrzeugs entlang der Fahrbahn entsteht. Diese Fahrbahnanregung würde sich in einem ungefederten und ungedämpften System unverändert jedoch zeitlich versetzt auf die Fahrerkabine übertragen.

Die Fahrbahnanregung, die durch die Fahrt des Fahrzeugs durch eine Fahrbahnunebenheit hervorgerufen wird, wird von dem Rad des Fahrzeugs an das Fahrwerk des Fahrzeugs weitergeleitet. Von dem Fahrwerk des Fahrzeugs wird diese an das Chassis des Fahrzeugs weitergeleitet. Das Chassis leitet die Fahrbahnanregung schließlich an die Fahrerkabine weiter. Bis die Fahrbahnanregung von dem Rad an die Fahrerkabine weitergeleitet wird, tritt ein zeitlicher Versatz auf, der als Totzeit bezeichnet wird. In dieser Totzeit ist die Fahrbahnanregung also noch nicht an die Fahrerkabine weitergeleitet, die Fahrerkabine reagiert also noch nicht auf die Fahrbahnanregung.

Die Fahrbahnanregung kann mittels der Sensordaten bezüglich der Bewegung des Fahrwerks oder des Chassis entweder von dem Sensorsystem selbst oder von der Steuereinrichtung bestimmt werden. Vorzugsweise bestimmt die Steuereinrichtung die Fahrbahnanregung. Die Fahrbahnanregung wird bei einer Fahrt des Fahrzeugs kontinuierlich bestimmt.

Die Steuereinrichtung steuert ausgehend von der Fahrbahnanregung die Fahrerkabinen-Lagerung des Fahrzeugs an. Genauer gesagt, steuert die Steuereinrichtung die Aktuatorik der Fahrerkabinen-Lagerung des Fahrzeugs an. Die Fahrerkabinen-Lagerung des Fahrzeugs wird derart aktuiert, dass die Reaktion der Fahrerkabine auf die Fahrbahnanregung abgeschwächt wird. Vorzugsweise wird die Reaktion der Fahrerkabine auf die Fahrbahnanregung derart abgeschwächt, dass die Fahrbahnanregung nicht an die Fahrerkabine weitergeleitet wird. In diesem Fall ist die Reaktion der Fahrerkabine gleich Null, d. h. die Fahrerkabine wird nicht in Schwingung versetzt. Dieses Aktuieren erfolgt innerhalb der Totzeit zwischen der Fahrbahnanregung und der Reaktion der Fahrerkabine. Das Aktuieren erfolgt während der Fahrt des Fahrzeugs kontinuierlich.

Auf den Fahrzeugnutzer wirken somit geringere Schwingungen oder keine Schwingungen, obwohl eine Fahrbahnanregung vorhanden ist. Dies wird auch als Sky-Hook-Regelung bezeichnet. Der Komfort des Fahrzeugnutzers, der sich in der Fahrerkabine befindet, wird deutlich erhöht im Vergleich zu einem herkömmlichen Fahrzeug mit Fahrerkabine. Vorteilhaft an dem vorgestellten Verfahren ist außerdem, dass das Sensorsystem genutzt werden kann, das bereits im Fahrzeug vorhanden ist, z. B. das Sensorsystem der Dämpfer des Fahrwerks. Somit kann das Verfahren kostengünstig umgesetzt werden, da keine zusätzliche Sensorik nötig ist.

Eine Steuereinrichtung für ein Fahrzeug ist mit einem Sensorsystem des Fahrzeugs und mit einer Fahrerkabinen-Lagerung des Fahrzeugs verbindbar. Dies wurde bereits in der vorherigen Beschreibung beschrieben. Verbindbar heißt, dass die Steuereinrichtung mit dem Sensorsystem des Fahrzeugs und mit der Fahrerkaninen-Lagerung des Fahrzeugs verbunden werden kann. Diese Verbindung ist jeweils derart, dass ein Datenaustausch stattfinden kann. Die Steuereinrichtung umfasst Mittel, die geeignet sind, die Schritte des Verfahrens auszuführen, das bereits in der vorherigen Beschreibung beschrieben wurde. Beispielsweise ist die Steuereinrichtung als ein ECU oder Domain-ECU ausgeformt. Vorzugsweise umfasst die Steuereinrichtung Computerprogrammcode zur Durchführung des Verfahrens. Die Steuereinrichtung ist beispielsweise Teil einer Fahrzeugsteuerung oder eine separate Steuereinrichtung.

Ein Fahrzeug weist eine Fahrerkabine, eine Fahrerkabinen-Lagerung und ein Sensorsystem auf. Zudem weist das Fahrzeug eine Steuereinrichtung auf, die bereits in der vorherigen Beschreibung beschrieben wurde. Die Steuereinrichtung ist mit dem Sensorsystem des Fahrzeugs und mit der Fahrerkabinen-Lagerung des Fahrzeugs verbunden. Dies wurde bereits in der vorherigen Beschreibung beschrieben.

Ein Computerprogrammprodukt umfasst Befehle, die bewirken, dass die Steuereinrichtung, die bereits in der vorherigen Beschreibung beschrieben wurde, die Verfahrensschritte des Verfahrens ausführt, das bereits in der vorherigen Beschreibung beschrieben wurde.

Ein computerlesbares Medium umfasst ein Computerprogrammprodukt, das bereits in der vorherigen Beschreibung beschrieben wurde. Unter dem Begriff "computerlesbares Medium" sind z. B. Festplatten und/oder Server und/oder Memorysticks und/oder Flash-Speicher und/oder DVDs und/oder Bluerays und/oder CDs und/oder ein herunterladbarer Datenstrom zu verstehen.

Anhand der im Folgenden erläuterten Figuren werden verschiedene Ausführungsbeispiele und Details der Erfindung näher beschrieben. Es zeigen:
- Fig. 1: eine schematische Darstellung eines Fahrzeugs und einer Fahrbahnanregung nach einem Ausführungsbeispiel,
- Fig. 2: eine schematische Darstellung eines Verfahrensablaufs nach einem Ausführungsbeispiel.

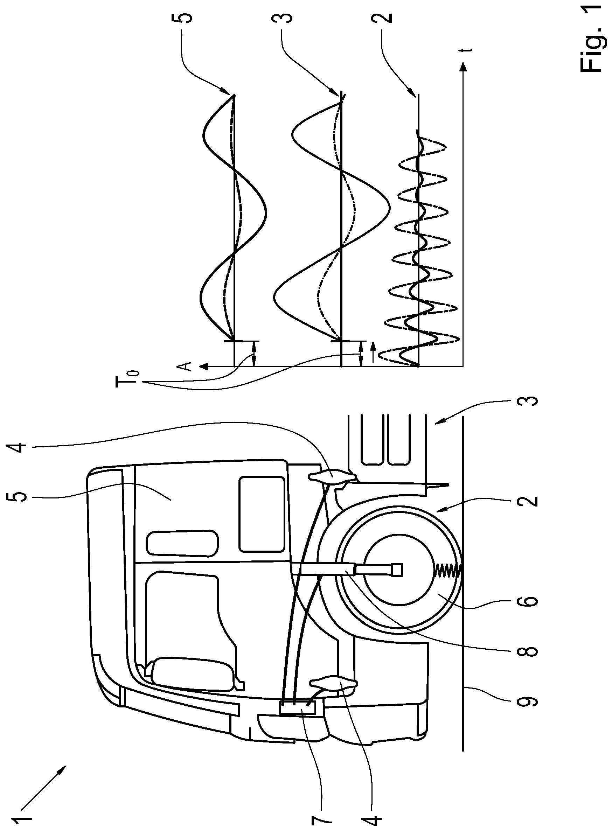

Fig. 1 zeigt eine schematische Darstellung eines Fahrzeugs 1 und einer Fahrbahnanregung nach einem Ausführungsbespiel. Es ist eine stark vereinfachte Schnittdarstellung des Fahrzeugs 1 dargestellt. Das Fahrzeug 1 weist ein Fahrwerk 2, ein Chassis 3 und eine Fahrerkabine 5 auf. Die Fahrerkabine 5 ist mittels der Fahrerkabine-Lagerung 4 mit dem Chassis 3 verbunden. Das Fahrwerk 2 ist mittels mehrerer Dämpfer 8 mit dem Chassis 3 verbunden. Von diesen Dämpfern 8 ist hier der Übersichtlichkeit halber nur einer dargestellt. Genauer gesagt ist hier ein Rad 6 des Fahrzeugs 1 an seinem Radträger mittels eines Dämpfers 8 mit dem Chassis 3 verbunden. Das Fahrzeug 1 befindet sich auf der Fahrbahn 9.

Das Fahrzeug 1 weist zudem die Steuereinrichtung 7 auf. Diese Steuereinrichtung 7 ist mit der Fahrerkabinen-Lagerung 4 und mit einem hier nicht dargestellten Sensorsystem an dem Dämpfer 8 verbunden. Diese Verbindung ist derart, dass ein Datenaustausch zwischen der Steuereinrichtung 7 und der Aktuatorik der Fahrerkabinen-Lagerung 4 sowie dem Sensorsystem des Dämpfers 8 erfolgen kann. Die Steuereinrichtung 7 kann somit die Aktuatorik der Fahrerkabinen-Lagerung 4 ansteuern. Zudem kann die Steuereinrichtung 7 Daten von dem Sensorsystem erhalten.

Das Sensorsystem weist z. B. Wegesensoren auf, die einen Kolbenweg des Dämpfers 8 ermitteln können. Alternativ dazu kann das Sensorsystem Drucksensoren aufweisen, die eine Druckänderung des Dämpfers 8 ermitteln können. Wiederum alternativ dazu kann das Sensorsystem Beschleunigungssensoren oder Geschwindigkeitssensoren aufweisen, die an dem Dämpfer 8 angeordnet sind, die eine Geschwindigkeit oder eine Beschleunigung des Dämpfers 8 in eine vertikale Richtung ermitteln können. In anderen Worten wird eine Bewegung des Dämpfers 8 in eine Hochrichtung ermittelt. Ausgehend von dieser Bewegung kann eine Fahrbahnanregung ermittelt werden.

Überfährt nun das Fahrzeug 1 mit seinen Rädern 6 eine Fahrbahnunebenheit, erfahren zunächst die Räder 6 eine Anregung durch die Fahrbahn 9. Das heißt die Räder 6 werden in Bewegung oder Schwingung versetzt. Diese Fahrbahnanregung wird von den Rädern 6 über das Fahrwerk 2 an das Chassis 3 weitergeleitet. Das Chassis 3 leitet diese Fahrbahnanregung an die Fahrerkabine 5 weiter. Die Fahrbahnanregung wird zum einen von den Dämpfern 8 und zum anderen von der Fahrerkabinen-Lagerung 4 abgemildert. Dies ist im nebenstehenden Diagramm dargestellt.

Im Diagramm sind die Schwingungsamplituden A über die Zeit t aufgetragen. zuunterst ist die Fahrbahnanregung, die in das Fahrwerk 2 eingeleitet ist, dargestellt. In der Mitte ist die Reaktion des Chassis 3 auf diese Fahrbahnanregung dargestellt. Zuoberst ist die Reaktion der Fahrerkabine 5 auf diese Fahrbahnanregung dargestellt. Es ist deutlich zu erkennen, dass zwischen der Fahrbahnanregung, die zuerst in das Fahrwerk 2 eingeleitet wird, und den Reaktionen des Chassis 3 und der Fahrerkabine 5 ein zeitlicher Versatz vorhanden ist. Dieser zeitliche Versatz wird als Totzeit To bezeichnet. Dargestellt sind zwei verschiedenen Fahrbahnanregungen, nämlich eine mit einer höheren und eine andere mit einer niedrigeren Amplitude A. Es ist deutlich zu erkennen, dass in beiden Fällen die Amplitude A an der Fahrerkabine 5 geringer ist als die Amplitude A an dem Chassis 3.

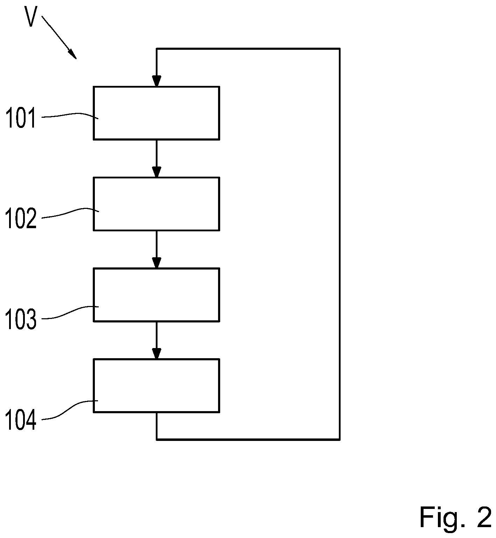

Fig. 2 zeigt eine schematische Darstellung eines Verfahrensablaufs nach einem Ausführungsbeispiel. Dargestellt ist das Verfahren V mit insgesamt vier Verfahrensschritten 101, 102, 103 und 104. Im ersten Verfahrensschritt 101 ermittelt das Sensorsystem des Fahrzeugs 1 eine Bewegung des Fahrwerks 2 und/oder eine Bewegung des Chassis 3.

In einem zweiten Schritt 102 bestimmt die Steuereinrichtung 7 ausgehend von den Sensordaten eine Fahrbahnanregung. In einem dritten Schritt 103 steuert die Steuereinrichtung 7 ausgehend von dieser Fahrbahnanregung die Aktuatorik der Fahrerkabinen-Lagerung 4 an.

In einem vierten Schritt 104 wird die Fahrerkabinen-Lagerung 4 derart aktuiert, dass eine Reaktion der Fahrerkabine 5 auf die Fahrbahnanregung abgemildert oder gar verhindert wird. Diese Aktuierung findet in der Totzeit To zwischen der Fahrbahnanregung und der Reaktion der Fahrerkabine 5 auf diese Fahrbahnanregung statt. In anderen Worten wird die Fahrerkabinen-Lagerung 4 derart aktuiert, dass diese der Fahrbahnanregung entgegen wirkt. Somit werden die Schwingungen, die in die Fahrerkabine 5 übertragen werden, abgemildert oder verhindert. Somit wird der Komfort des Fahrzeugnutzers, der sich in der Fahrerkabine 5 befindet, deutlich gesteigert.

Da sich das Fahrzeug 1 entlang der Fahrbahn 9 weiterbewegt, findet die Aktuierung der Fahrerkabinen-Lagerung 4 kontinuierlich statt. Das heißt, das Sensorsystem des Fahrzeugs 1 ermittelt kontinuierlich die Bewegung des Fahrwerks 2 oder des Chassis 3, wie im ersten Schritt 101 dargestellt. Daraufhin wird kontinuierlich die Fahrbahnanregung ausgehend von den Sensordaten bestimmt, wie im zweiten Schritt 102 dargestellt. Zudem steuert die Steuereinrichtung 7 kontinuierlich die Aktuatorik der Fahrerkabinenlagerung 4 an, wie im dritten Schritt 103 dargestellt. Außerdem wird die Fahrerkabinen-Lagerung 4 kontinuierlich in der Totzeit To zwischen der Fahrbahnanregung und der Reaktion der Fahrerkabine 5 auf die Fahrbahnanregung aktuiert.

Dadurch, dass das Verfahren V kontinuierlich durchlaufen wird, kann eine sogenannte Sky-Hook-Regelung dargestellt werden. Das heißt, es werden nur sehr geringe oder keine Schwingungen an die Fahrerkabine 5 weitergegeben.

Vorteilhaft an dem hier dargestellten Verfahren V ist, dass Sensorsysteme genutzt werden können, die bereits in dem Fahrzeug 1 vorhanden sind. Dadurch kann das Verfahren V kostengünstig umgesetzt werden.

### Bezugszeichen

- 1: Fahrzeug
- 2: Fahrwerk
- 3: Chassis
- 4: Fahrerkabinen-Lagerung
- 5: Fahrerkabine
- 6: Rad
- 7: Steuereinrichtung
- 8: Dämpfer
- 9: Fahrbahn

- 101: erster Schritt
- 102: zweiter Schritt
- 103: dritter Schritt
- 104: vierter Schritt

- A: Amplitude
- t: Zeit
- To: Totzeit
- V: Verfahren

## Patentansprüche

1. Verfahren (V) zur Steigerung eines Komforts eines Fahrzeugnutzers eines Fahrzeugs (F), **dadurch gekennzeichnet, dass**
- ein Sensorsystem des Fahrzeugs (1) eine Bewegung eines Fahrwerks (2) und/oder eines Chassis (3) des Fahrzeugs (1) ermittelt,
- ausgehend von den Sensordaten eine Fahrbahnanregung bestimmt wird,
- eine Steuereinrichtung (7), die mit dem Sensorsystem verbunden ist, ausgehend von der Fahrbahnanregung eine Fahrerkabinen-Lagerung (4) des Fahrzeugs (1) ansteuert, wobei die Fahrerkabinen-Lagerung (4) mit der Steuereinrichtung (7) verbunden ist,
- die Fahrerkabinen-Lagerung (4) in einer Totzeit (To) zwischen der Fahrbahnanregung und einer Reaktion einer Fahrerkabine (5) des Fahrzeugs (1) derart aktuiert wird, dass die Reaktion der Fahrerkabine (5) auf die Fahrbahnanregung abgeschwächt wird.

2. Verfahren (V) nach Anspruch 1, **dadurch gekennzeichnet, dass** die Bewegung, die durch das Sensorsystem ermittelt wird, durch eine vertikale Beschleunigung oder eine vertikale Geschwindigkeit des Fahrwerks (2) und/ oder des Chassis (3) ausgebildet ist.

3. Verfahren (V) nach einem der vorherigen Ansprüche, **dadurch gekennzeichnet, dass** die Bewegung, die durch das Sensorsystem ermittelt wird, durch eine Abstandänderung des Fahrwerks (2) und/ oder des Chassis (3) zur Fahrbahn (9) ausgebildet ist.

4. Verfahren (V) nach einem der vorherigen Ansprüche, **dadurch gekennzeichnet, dass** die Bewegung, die durch das Sensorsystem ermittelt wird, durch eine Relativbewegung zwischen Chassis (3) und Fahrwerk (2) ausgebildet ist.

5. Verfahren (V) nach einem der vorherigen Ansprüche, **dadurch gekennzeichnet, dass** die Bewegung, die durch das Sensorsystem ermittelt wird, durch einen Kolbenweg wenigstens eines Dämpfers (8) des Fahrwerks (2) ausgebildet ist.

6. Verfahren (V) nach einem der vorherigen Ansprüche, **dadurch gekennzeichnet, dass** die Bewegung, die durch das Sensorsystem ermittelt wird, durch einen Druck wenigstens eines Dämpfers (8) des Fahrwerks (2) ausgebildet ist.

7. Steuereinrichtung (7) für ein Fahrzeug (1), wobei die Steuereinrichtung (7) mit einem Sensorsystem des Fahrzeugs (1) und mit einer Fahrerkabinen-Lagerung (4) des Fahrzeugs (1) verbindbar ist, **dadurch gekennzeichnet, dass** die Steuereinrichtung (7) Mittel umfasst, die geeignet sind, die Schritte des Verfahrens (V) nach einem der vorhergehenden Ansprüche auszuführen.

8. Fahrzeug (1), aufweisend eine Fahrerkabine (5), eine Fahrerkabinen-Lagerung (4) und ein Sensorsystem, **dadurch gekennzeichnet, dass** das Fahrzeug (1) eine Steuereinrichtung (7) nach Anspruch 7 aufweist, wobei die Steuereinrichtung (7) mit dem Sensorsystem des Fahrzeugs (1) und mit der Fahrerkabinen-Lagerung (4) des Fahrzeugs (1) verbunden ist.

9. Computerprogrammprodukt, umfassend Befehle, die bewirken, dass die Steuereinrichtung (7) nach Anspruch 7 die Verfahrensschritte des Verfahrens (V) nach einem der Ansprüche 1 bis 6 ausführt.

10. Computerlesbares Medium, **dadurch gekennzeichnet, dass** das computerlesbare Medium das Computerprogrammprodukt nach Anspruch 9 umfasst.
